# EUROPÄISCHE PATENTANMELDUNG

(11) **EP 0 802 086 A2**
(43) Veröffentlichungstag der Anmeldung: **22.10.1997**
(21) Anmeldenummer: 97200788.4
(22) Anmeldetag: 17.03.1997
(51) Int. Cl.: B60R 16/02

(54) **Multifunktions-Bedieneinrichtung**

(30) Priorität: 23.03.1996 DE 19611551
(71) Anmelder: Philips Patentverwaltung GmbH, 22335 Hamburg (DE); Philips Electronics N.V., 5621 BA Eindhoven (NL)
(72) Erfinder: Wiege, Bernd, Röntgenstrasse 24, 22335 Hamburg (DE); Hock, Bertram, Dr., Röntgenstrasse 24, 22335 Hamburg (DE)
(74) Vertreter: von Laue, Hanns-Ulrich, Dipl.-Ing.

(57) **Zusammenfassung**

Für eine Multifunktions-Bedieneinrichtung für Fahrzeuge, welche eine Auswahl von Funktionsgruppen (Menus) oder einzelne Funktionen gestattet, ist für eine möglichst universelle Einsatzmöglichkeit vorgesehen, daß die Multifunktions-Bedieneinrichtung einen Trackball aufweist, der der Auswahl von Funktionsgruppen und/oder Funktionen dient und mittels dessen durch Drehen des Trackballs und in Abhängigkeit der Drehrichtung und Umfang der Drehung des Trackballs einzelnen Funktionsgruppen und/oder Funktionen zugeordnete Auswahlfelder auswählbar sind, daß bei Drehung des Trackballs in einer beliebigen Richtung nacheinander in dieser Bewegungsrichtung vorgesehene Auswahlfelder auswählbar sind, und daß ein mittels des Trackballs ausgewähltes Auswahlfeld besonders optisch gekennzeichnet ist.

## Beschreibung

Die Erfindung betrifft eine Multifunktions-Bedieneinrichtung für Fahrzeuge, welche eine Auswahl von Funktionsgruppen (Menus) oder einzelnen Funktionen gestattet.

Eine derartige Multifunktions-Bedieneinrichtung ist aus der EP-0 366 132 bekannt. Diese Multifunktions-Bedieneinrichtung weist einen bidirektionalen Drehschalter auf, der zur Menuauswahl und individuellen Funktionsauswahl dient. Der Drehschalter besitzt Raststellungen, denen einzelne Menus oder einzelne Funktionen zugeordnet sind. Durch Axialbewegung des Drehschalters ist eine Enter-Funktion auslösbar. Diese Multifunktions-Bedieneirtrichtung weist den Nachteil auf, daß eine Auswahl von Auswahlfeldern, die zweidimensional angeordnet sind und beispielsweise auf einem Bildschirm dargestellt werden, entweder immer vier in horizontaler oder nur in vertikaler Richtung möglich ist. Es gestaltet sich auf diese Weise schwierig, sich zu einem bestimmten Punkt in einem derartigen zweidimensionalen Menu durchzuarbeiten, der beispielsweise in schräger Richtung also in einem Winkel von 45° zu der Ausgangsposition liegt.

Es ist Aufgabe der Erfindung, eine Multifunktions-Bedieneinrichtung der eingangs genannten Art dahingehend weiterzuentwickeln, daß sie eine möglichst universelle Eingabemöglichkeit auch für derartige Menus, die in einem zweidimensionalen Raum angeordnete Auswahlfelder aufweisen, gestattet.

Diese Aufgabe ist gemäß einer ersten Ausführungsform dadurch gelöst, daß die Multifunktions-Bedieneinrichtung einen Trackball aufweist, der der Auswahl von Funktionsgruppen und/oder Funktionen dient und mittels dessen durch Drehen des Trackballs und in Abhängigkeit der Drehrichtung und Umfang der Drehung des Trackballs einzelnen Funktionsgruppen und/oder Funktionen zugeordnete Auswahlfelder auswählbar sind, daß bei Drehung des Trackballs in einer beliebigen Richtung nacheinander in dieser Bewegungsrichtung vorgesehene Auswahlfelder auswählbar sind, und daß ein mittels des Trackballs ausgewähltes Auswahlfeld besonders optisch gekennzeichnet ist.

Ein derartiger Trackball, wie er aus dem Computerbereich an sich bekannt ist, gestattet es, durch Drehen des Trackballs in die gewünschte Richtung unmittelbar die Richtung über die Multifunktions-Bedieneinrichtung anzugeben. So sind nicht nur Eingaben in vertikaler oder horizontaler Richtung möglich, sondern auch Eingaben in beliebigen Richtungen zwischen diesen beiden Richtungen. Auf einem Bildschirm sind Auswahlfelder symbolisiert, die durch Bewegung des Trackballs ausgewählt werden können. Das jeweils ausgewählte Auswahlfeld ist optisch gekennzeichnet. Durch Bewegung des Trackballs ist keine kontinuierliche Bewegung der Markierung möglich, wie dies beispielsweise beim Computer üblich ist. Vielmehr werden beim Bewegen des Trackballs in eine bestimmte Richtung die in dieser Richtung angeordneten Auswahlfelder nacheinander ausgewählt. Es findet hier also eine diskontinuierliche Bewegung in der Art eines Springens des Cursors statt.

Beispielsweise in einem Auswahlfeld, in dem auf einem Bildschirm in einer zweidimensionalen Ebene eine Vielzahl von Auswahlfeldern angeordnet ist, kann mittels des Trackballs auf äußerst einfache Weise eine Markierung des gewünschten Auswahlfeldes, dem die gewünschte Funktionsgruppe und/oder Funktion zugeordnet ist, stattfinden. Der Benutzer kann sich mit dem Trackball in beliebiger Richtung auf das gewünschte Auswahlfeld zubewegen, bis dieses ausgewählt und optisch gekennzeichnet ist.

Gemäß einer Ausgestaltung dieser ersten Ausführungsform der Erfindung ist vorgesehen, daß eine Enter-Funktion zur Aktivierung einer Funktionsgruppe und/oder einer Funktion, deren zugeordenetes Auswahlfeld ausgewählt ist, mittels Drücken auf den Trackball auslösbar ist.

Durch Drücken des Trackballs kann die Enter-Funktion auf einfache Weise ausgelöst werden, ohne daß eine zusätzliche Taste betätigt werden muß. Damit bietet der Trackball nicht nur eine universelle Auswählmöglichkeit in einer zweidimensionalen Ebene, sondern gleichzeitig auch die Möglichkeit des Auslösens einer Enter-Funktion also der Aktivierung einer Funktionsgruppe und/oder einer Funktion.

Gemäß einer weiteren Ausgestaltung ist für die erste Ausführungsform der Erfindung vorgesehen, daß die in Abhängigkeit der Trackballbewegung vornehmbare Auswahl der Auswahlfelder Software-gesteuert erfolgt.

Wie oben erläutert wurde, werden bei Bewegung des Trackballs in eine bestimmte Richtung nacheinander die in dieser Richtung vorgesehenen Auswahlfelder ausgewählt. Es findet also ein disquantinierliches Springen des markierten Auswahlfeldes statt. Die Erkennung der Bewegungsrichtung und die Erkennung, daß in Abhängigkeit der Drehrichtung des Trackballs und in Abhängigkeit des Umfangs der Drehung die Auswahl eines Auswahlfeldes in einer bestimmten Richtung gewünscht ist, kann vorteilhaft durch eine Software gesteuert werden. Eine derartige Software ist leicht an veränderte Umgebungsbedingungen anpaßbar. Es ist auch denkbar, daß die Software auf den Benutzer einstellbar ist, beispielsweise dahingehend wie empfindlich die Bedieneinrichtung auf die Drehung des Trackballs reagiert, d.h. also beispielsweise welcher Drehumfang erforderlich ist, um von einem ausgewählten Auswahlfeld zum nächsten Auswahlfeld zu springen und dieses auszuwählen.

Für eine zweite Ausführungsform der Erfindung ist vorgesehen, daß die Multifunktions-Bedieneinrichtung ein Sensorfeld aufweist, das einer Auswahl von Funktionsgruppen und/oder Funktionen dient und mittels dessen durch Führen eines Fingers einer Bedienperson auf dem Sensorfeld einzelnen Funktionsgruppen und/oder Funktionen zugeordnete, auf einem Bildschirm symbolisierte Auswahlfelder in der Weise auswählbar sind, daß bei Führung des Fingers der Bedienperson auf dem Sensorfeld in einer beliebigen Richtung nacheinander in dieser Bewegungsrichtung vorgesehene Auswählfelder ausgewählt werden, und daß ein mittels des Sensorfeldes ausgewähltes Auswählfeld besonders optisch gekennzeichnet ist.

Auf einem derartigen Sensorfeld kann durch Führen eines Fingers einer Bedienperson in einer bestimmten Richtung der Bedieneinrichtung mitgeteilt werden, in welcher Richtung der Cursor sich bewegen soll, d.h. also in welcher Richtung Auswählfelder nacheinander ausgewählt werden sollen. In Abhängigkeit der Dauer des Führens des Fingers bzw. davon, wie weit der Finger in dieser Richtung geführt wird, werden nacheinander in dieser Bewegungsrichtung vorgesehene Auswählfelder ausgewählt. Auch hier sind jedem Auswahlfeld eine Funktionsgruppe oder eine einzelne Funktion zugeordnet. Das Sensorfeld ist dabei getrennt von dem Bildschirm angeordnet, auf dem die Auswahlfelder symbolisiert dargestellt sind. Auch hier kann, ähnlich wie bei der ersten Ausführungsform der Erfindung, durch Bewegen des Fingers in einer beliebigen Richtung die gewünschte Richtung vorgegeben werden. Es liegt keine Bindung an bestimmte horizontale oder vertikale Richtungen vor. In einem zweidimensional auf dem Bildschirm dargestellten Feld mit diesen Auswahlfeldern kann der Bediener sich in beliebigen Richtungen bewegen.

Für eine Ausgestaltung dieser zweiten Ausführungsform der Erfindung ist vorgesehen, daß eine Enter-Funktion zur Aktivierung einer Funktionsgruppe und/oder einer Funktion, deren zugeordenetes Auswählfeld ausgewählt ist, mittels intensivierten Druck auf das Sensorfeld auslösbar ist.

Ist durch das Führen des Fingers auf dem Sensorfeld schließlich das gewünschte Auswahlfeld ausgewählt und optisch markiert, so kann durch verstärkten Druck des Fingers auf das Sensorfeld das ausgewählte Sensorfeld aktiviert werden. Damit wird die diesem Sensorfeld zugeordnete Funktion oder Funktionsgruppe ausgelöst. Es besteht dabei der Vorteil, daß keine weitere Bedieneinrichtung für diese Enter-Funktion erforderlich ist. Vielmehr kann das Sensorfeld auch für die Auslösung der Enter-Funktion eingesetzt werden.

Für eine weitere Ausgestaltung dieser zweiten Ausführungsform der Erfindung ist vorgesehen, daß die in Abhängigkeit der Bewegung des Fingers der Bedienperson auf dem Sensorfeld vornehmbare Auswahl der Auswahlfelder Software-gesteuert erfolgt. Damit kann, ähnlich wie bei der ersten Ausführungsform der Erfindung, das disquantinuierliche Springen der ausgewählten Auswahlfelder in idealer Weise gesteuert werden. Auch hier kann gegebenenfalls eine Abhängigkeit von den Wünschen des Bedieners erfolgen.

Für beide erfindungsgemäßen Ausführungsformen gemeinsam ist gemäß einer weiteren Ausgestaltung der Erfindung vorgesehen, daß die Multifunktions-Bedieneinrichtung so in das Fahrzeug eingebaut ist, daß sich die Hand des Bedieners an einem Teil des Fahrzeugs abstützen kann. Durch einen derartigen Einbau wird sichergestellt, daß die Auswahl des gewünschten Auswahlfeldes auch während der Fahrt des Fahrzeugs stattfinden kann und bei gegebenenfalls vorliegenden Erschütterungen nicht gestört wird.

Dazu kann die Multifunktions-Bedieneinrichtung vorteilhaft, wie gemäß einer weiteren Ausgestaltung der Erfindung vorgesehen ist, in einen Griff oder Schalthebel des Fahrzeugs eingebaut sein. Damit ist ein unmittelbarer Zugriff des Bedieners auf die Multifunktions-Bedieneinrichtung gegeben.

Eine derartige Multifunktions-Bedieneinrichtung nach beiden Ausführungsformen der Erfindung kann vorteilhaft zur Steuerung eines Audio-, eines Informations- und/oder eines Navigations-Systems eines Fahrzeugs eingesetzt werden. Vorteilhaft kann eine derartige Multifunktions-Bedieneinrichtung für mehrere Systeme gleichzeitig eingesetzt werden, da durch eine entsprechende Menuauswahl, die auf einfache Weise mittels der Multifunktions-Bedieneinrichtung vornehmbar ist, zwischen vielen verschiedenen Funktionsgruppen ausgewählt werden kann. Innerhalb der Funktionsgruppen ist dann eine einfache Auswahl der einzelnen Funktionen möglich.

Nachfolgend werden die beiden Ausführungsformen der Erfindung anhand der Zeichnung näher erläutert. Es zeigen:
Fig. 1 eine schematische Darstellung eines Ausführungsbeispiels einer ersten Ausführungsform der Multifunktions-Bedieneinrichtung mit einem Trackball,
Fig. 2 eine schematische Darstellung eines Ausführungsbeispiels einer zweiten Ausführungsform der Erfindung mit einem Sensorfeld,
Fig. 3 eine schematische Darstellung eines Bildschirms mit verschiedenen Auswahlfeldern, von denen einige nacheinander ausgewählt werden und
Fig. 4 eine Darstellung entsprechend Fig. 3 mit einem ausgewählten Auswahlfeld.

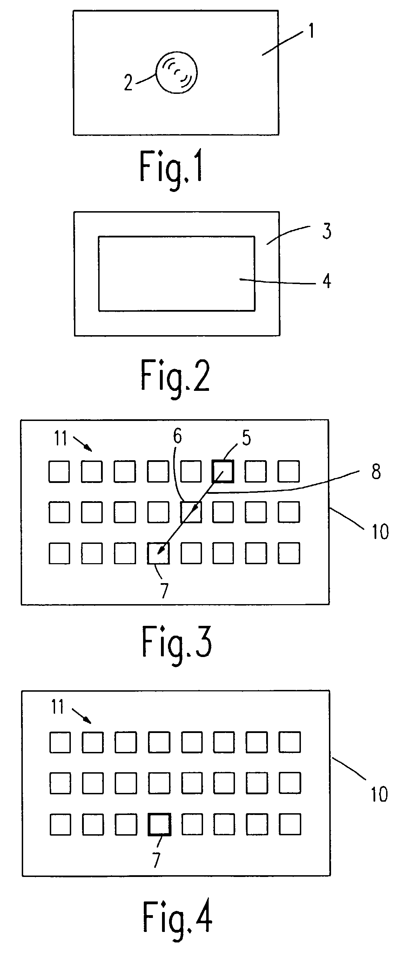

Die schematische Darstellung in Fig. 1 zeigt eine Multifunktions-Bedieneinrichtung 1 einer ersten Ausführungsform, welche einen Trackball 2 aufweist. Der Trackball 2 ist in beliebige Richtungen drehbar. Er gestattet damit die Auswahl von Funktionen oder Funktionsgruppen. Diese Auswahl wird vorgenommen durch die Auswahl der jeweils zugeordneten Auswahlfelder auf einem zugeordneten Bildschirm, der jedoch getrennt von der in Fig. 1 dargestellten Multifunktions-Bedieneinrichtung 1 angeordnet ist.

Darüber hinaus besteht die Möglichkeit, durch Druck auf den Trackball 2 eine Enter-Funktion auszulösen. Ist also das gewünschte Auswählfeld ausgewählt und auf dem in Fig. 1 nicht dargestellten Bildschirm entsprechend optisch markiert, kann die zugeordnete Funktionsgruppe oder Funktion durch Drücken auf den Trackball 2 aktiviert werden.

Die schematische Darstellung in Fig. 2 zeigt eine zweite Ausführungsform der erfindungsgemäßen Multifunktions-Bedieneinrichtung. Es ist dort eine Multifunktions-Bedieneinrichtung 3 angedeutet, welche ein Sensorfeld 4 aufweist. Eine Bedienperson kann durch Führen eines Fingers auf dem Sensorfeld 4 in der gewünschten Richtung nacheinander in dieser Richtung auf einem getrennt angeordneten Bildschirm angedeutete Auswahlfelder auswählen. Ähnlich wie für den Trackball der Bedieneinrichtung 1 gemäß Fig. 1 gilt auch für diese Bedieneinrichtung mit dem Sensorfeld 4, daß eine Bewegung in beliebiger Richtung stattfinden kann.

Die in Fig. 2 dargestellte Multifunktions-Bedieneinrichtung 3 mit dem Sensorfeld 4 gestattet es zusätzlich, eine Enter-Funktion auszulösen. Damit wird das ausgewählte Auswahlfeld aktiviert, d.h. die zugeordnete Funktion oder Funktionsgruppe wird ausgelöst.

Ein derartiger Auswahl- und Auslösevorgang wird nachfolgend anhand der Fig. 3 und 4 näher erläutert.

Fig. 3 zeigt in schematischer Darstellung einen Bildschirm 10, der vorteilhaft getrennt von einer der Bedieneinrichtungen 1 oder 3 gemäß den Fig. 1 oder 2 angeordnet ist.

Auf dem Bildschirm 10 sind dünn dargestellte Auswählfelder 11 angedeutet, die auswählbar sind. Jedem der Auswählfelder 11 ist eine Funktionsgruppe oder Funktion zugeordnet.

In dem in Fig. 3 dargestellten Beispiel ist zunächst ein Auswahlfeld 5 ausgewählt. Dieses Auswahlfeld 5 ist in der Darstellung gemäß Fig. 3 dick eingetragen. Dieses Auswahlfeld kann beispielsweise nach Einschalten der Multifunktions-Bedieneinrichtung bzw. des zugeordneten Bildschirms aktiviert sein, es kann sich aber auch um diejenige Funktion oder Funktionsgruppe handeln, die zuvor ausgewählt wurde.

Besteht beispielsweise der Wunsch, statt des Auswählfeldes 5 das Auswählfeld 7 auszuwählen, so kann eine Bedienperson entweder den Trackball 2 der Bedieneinrichtung 1 gemäß Fig. 1 oder das Sensorfeld 4 der Bedieneinrichtung 3 gemäß Fig. 2 so bedienen, daß zunächst das Auswahlfeld 6 der Darstellung gemäß Fig. 3 und nachfolgend das Auswahlfeld 7 ausgewählt werden. Diese Felder erscheinen dann nacheinander optisch hervorgehoben, beispielsweise durch fette Darstellung der Ränder des Auswahlfeldes.

Im Falle der ersten Ausführungsform der erfindungsgemäßen MultifunktionsBedieneinrichtung gemäß Fig. 1 wird dazu der Trackball 2 in entsprechender Richtung und mit entsprechendem Drehumfang gedreht. Dabei kann die nacheinander erfolgende Auswahl der Auswahlfelder 5, 6 gemäß der Darstellung in Fig. 3 in Richtung des Pfeiles 8 beispielsweise Software-gesteuert vorgenommen werden. Es findet eine disquantinuierliche Auswahl statt, d.h. es werden nacheinander die genannten Auswahlfelder markiert. Eine Markierung übriger Bereiche der Darstellung des Bildschirmes ist nicht möglich.

In entsprechender Weise kann die zweite Ausführungsform der Multifunktions-Bedieneinrichtung gemäß Fig. 2 zur Auswahl der Auswahlfelder auf dem Bildschirm 10 gemäß Fig. 3 eingesetzt werden. Dazu wird über das Sensorfeld 4 der Multifunktions-Bedieneinrichtung 3 gemäß Fig. 2 ein Finger der Bedienperson in der gewünschten Richtung geführt. Dadurch werden nacheinander die Auswahlfelder 5, 6, 7 aktiviert.

Dieses Beispiel gemäß Fig. 3 zeigt, daß die Multifunktions-Bedieneinrichtungen 1 und 3 gemäß den Fig. 1 und 2 eine Auswahl von Auswahlfeldern in beliebiger Richtung gestatten. Es ist nicht nur eine Auswähl in bestimmten vorgegebenen Richtungen möglich.

Fig. 4 zeigt schließlich den Bildschirm 10 gemäß Fig. 3, in dem nunmehr das gewünschte Auswahlfeld 7 ausgewählt ist und optisch hervorgerufen dargestellt ist. Soll die diesem Auswahlfeld 7 zugeordnete Funktion oder Funktionsgruppe ausgelöst werden, so kann dies durch Druck auf den Trackball 2 der Bedieneinrichtung 1 gemäß Fig. 1 oder durch intensivierten Druck auf das Sensorfeld 4 der Bedieneinrichtung 3 gemäß Fig. 2 geschehen.

## Patentansprüche

1. Multifunktions-Bedieneinrichtung für Fahrzeuge, welche eine Auswahl von Funktionsgruppen (Menus) oder einzelnen Funktionen gestattet,
dadurch gekennzeichnet,
daß die Multifunktions-Bedieneinrichtung einen Trackball aufweist, der der Auswahl von Funktionsgruppen und/oder Funktionen dient und mittels dessen durch Drehen des Trackballs und in Abhängigkeit der Drehrichtung und Umfang der Drehung des Trackballs einzelnen Funktionsgruppen und/oder Funktionen zugeordnete Auswahlfelder auswählbar sind, daß bei Drehung des Trackballs in einer beliebigen Richtung nacheinander in dieser Bewegungsrichtung vorgesehene Auswahlfelder auswählbar sind, und daß ein mittels des Trackballs ausgewähltes Auswahlfeld besonders optisch gekennzeichnet ist.

2. Multifunktions-Bedieneinrichtung nach Anspruch 1, dadurch gekennzeichnet,
daß eine Enter-Funktion zur Aktivierung einer Funktionsgruppe und/oder einer Funktion, deren zugeordenetes Auswahlfeld ausgewählt ist, mittels Drücken auf den Trackball auslösbar ist.

3. Multifunktions-Bedieneinrichtung nach Anspruch 1 oder 2, dadurch gekennzeichnet,
daß die in Abhängigkeit der Trackballbewegung vornehmbare Auswahl der Auswahlfelder Software-gesteuert erfolgt.

4. Multifunktions-Bedieneinrichtung für Fahrzeuge, welche eine Auswahl von Funktionsgruppen (Menus) oder einzelnen Funktionen gestattet, dadurch gekennzeichnet,
daß die Multifunktions-Bedieneinrichtung ein Sensorfeld aufweist, das einer Auswahl von Funktionsgruppen und/oder Funktionen dient und mittels dessen durch Führen eines Fingers einer Bedienperson auf dem Sensorfeld einzelnen Funktionsgruppen und/oder Funktionen zugeordnete, auf einem Bildschirm symbolisierte Auswahlfelder in der Weise auswählbar sind, daß bei Führung des Fingers der Bedienperson auf dem Sensorfeld in einer beliebigen Richtung nacheinander in dieser Bewegungsrichtung vorgesehene Auswahlfelder ausgewählt werden, und daß ein mittels des Sensorfeldes ausgewähltes Auswahlfeld besonders optisch gekennzeichnet ist.

5. Multifunktions-Bedieneinrichtung nach Anspruch 4, dadurch gekennzeichnet,
daß eine Enter-Funktion zur Aktivierung einer Funktionsgruppe und/oder einer Funktion, deren zugeordenetes Auswahlfeld ausgewählt ist, mittels intensivierten Druck auf das Sensorfeld auslösbar ist.

6. Multifunktions-Bedieneinrichtung nach Anspruch 4 oder 5, dadurch gekennzeichnet,
daß die in Abhängigkeit der Bewegung des Fingers der Bedienperson auf dem Sensorfeld vornehmbare Auswahl der Auswahlfelder Software-gesteuert erfolgt.

7. Multifunktions-Bedieneinrichtung nach einem der Ansprüche 1 bis 6, dadurch gekennzeichnet
daß die Multifunktions-Bedieneinrichtung so in das Fahrzeug eingebaut ist, daß sich die Hand des Bedieners an einem Teil des Fahrzeugs abstützen kann.

8. Multifunktions-Bedieneinrichtung nach Anspruch 7, dadurch gekennzeichnet,
daß die Multifunktions-Bedieneinrichtung in einen Griff oder Schalthebel des Fahrzeugs eingebaut ist.

9. Verwendung der Multifunktions-Bedieneinrichtung nach einem der Ansprüche 1 bis 8 zur Steuerung eines Audio-/Informations- und/oder Navigations-Systems des Fahrzeugs.
